**Europäisches Patentamt**

**European Patent Office**

**Office européen des brevets**

(19)

(11) Numéro de publication: **0 178 015
B1**

# (12) FASCICULE DE BREVET EUROPEEN

(45) Date de publication du fascicule du brevet:
**11.05.88**

(51) Int. Cl.⁴: **G 02 B 23/12**

(21) Numéro de dépôt: **85201573.4**

(22) Date de dépôt: **01.10.85**

(54) **Systéme d'observation nocturne semi-actif à intensification de lumière.**

(30) Priorité: **05.10.84 FR 8415309**

(43) Date de publication de la demande:
**16.04.86 Bulletin 86/16**

(45) Mention de la délivrance du brevet:
**11.05.88 Bulletin 88/19**

(84) Etats contractants désignés:
**DE FR GB NL**

(56) Documents cités:
**DE - A - 2 037 583**
**DE - A - 2 405 186**
**DE - B - 1 210 360**
**GB - A - 1 132 505**
**GB - A - 1 524 691**
**US - A - 3 305 633**
**US - A - 3 467 773**
**US - A - 3 509 344**
**US - A - 3 610 755**
**US - A - 3 902 803**

(73) Titulaire: **TELECOMMUNICATIONS
RADIOELECTRIQUES ET TELEPHONIQUES T.R.T.,
88, rue Briliat Savarin, F-75013 Paris (FR)**

(84) Etats contractants désignés: **FR**

(73) Titulaire: **N.V. Philips' Gloeilampenfabrieken,
Groenewoudseweg 1, NL-5621 BA Eindhoven (NL)**

(84) Etats contractants désignés: **DE GB NL**

(72) Inventeur: **Loy, Fernand René, SOCIETE CIVILE
S.P.I.D. 209 rue de l'Université, F-75007 Paris (FR)**

(74) Mandataire: **Chaffraix, Jean et al, Société Civile
S.P.I.D. 209, rue de l'Université, F-75007 Paris (FR)**

ACTORUM AG

## Description

L'invention concerne un système d'observation nocturne semi-actif à intensification de lumière comportant pour l'observation normale du paysage en mode de fonctionnement passif un objectif à grande ouverture formant l'image du paysage sur un tube intensificateur, ladite image étant transmise à une caméra de télévision reliée à un dispositif de visualisation par un boîtier de commande dont la mise en action permet le passage à un mode de fonctionnement actif en déclenchant l'émission d'un flash lumineux unique de longueur d'onde extérieure au spectre visible pour produire un éclairage pulsé de la zone centrale du paysage. Ledit flash lumineux ayant une durée très brève et une faible énergie ne permettant pas son exploitation directe à l'oeil, et une mémoire d'image chargée par l'image du champ éclairé puis relue et visualisée par ledit dispositif de visualisation, le mode de fonctionnement consécutif à l'extinction du flash devenant passif tant que ladite image mise en mémoire est visualisée, l'action sur ledit boîtier de commande permettant le retour à l'observation normale du paysage en mode de fonctionnement passif.

On connaît des systèmes d'observation nocturne entièrement passifs à intensification de lumière comme par exemple des lunettes ou des jumelles d'observation utilisant des tubes intensificateurs (cas des appareils légers) ou encore des caméras de télévision à bas niveau de lumière (cas des appareils plus lourds).

On connaît d'autre part des systèmes d'observation nocturne actifs pour lesquels une source lumineuse fournit un éclairage d'appoint du paysage. Parmi ceux-ci, les uns ont un éclairage permanent pendant la période d'observation, les autres ont un éclairage pulsé synchronisé avec un obturateur sur la voie intensificatrice (appareils de tomoscopie, US-A-3 467 773).

Les systèmes passifs ont l'avantage d'être indétectables mais leur portée de reconnaissance est médiocre lorsque l'éclairement du ciel nocturne est faible.

Les systèmes actifs ont de très bonnes portées, mais ils sont très détectables par l'adversaire.

Le brevet des Etats-Unis d'Amérique n° 3 509 344 décrit un dispositif à lunette d'observation nocturne qui combine le système passif avec un système actif dans lequel l'image de la scène éclairée par le rayonnement infra-rouge est transformée en une image visible dans la lunette au moyen d'un tube convertisseur.

Le système semi-actif objet de la présente invention combinant également les deux systèmes a pour but d'améliorer très sensiblement la portée de reconnaissance tout en ayant une faible détectabilité comparable à celle d'un télémètre laser.

La description suivante en regard des dessins annexés, le tout donné à titre d'exemple fera bien comprendre comment l'invention peut être réalisée.

La figure 1 représente le schéma de l'appareil conforme à l'invention.

La figure 2 représente le champ du système en fonctionnement passif et en fonctionnement semi-actif.

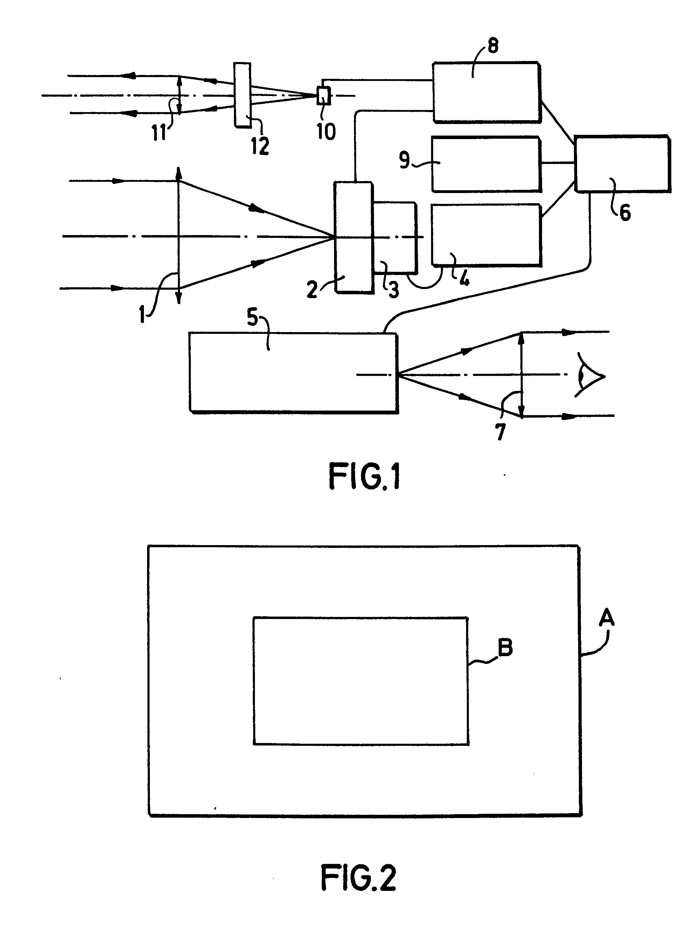

Sur le schéma de la figure 1, un objectif à grande ouverture 1 forme l'image du paysage sur un tube intensificateur 2. L'ensemble objectif et tube fonctionne dans le visible et le proche infra-rouge. Cette image est reprise par une caméra de télévision 3 et son alimentation 4 reliées à un dispositif de visualisation 5 par l'intermédiaire d'un boîtier de commande 6. L'image est observée à travers un oculaire 7.

La partie de l'appareil ainsi décrite concerne son utilisation normale en fonctionnement passif pour lequel le système est équivalent à une caméra de télévision à bas niveau de lumière.

Lorsque l'observateur a cru apercevoir une cible qu'il désire identifier, il appuie sur la gachette du boîtier de commande 6 pour déclencher, par l'intermédiaire d'un boîtier de réglage 8, l'émission d'un flash lumineux unique 10 de très courte durée et de faible énergie dont le champ est nettement délimité au moyen du projecteur 11, de façon à n'éclairer que le centre du champ observé.

Cet éclairage d'appoint améliore le rapport signal/bruit et le contraste de l'image, mais la durée très brève du flash n'en permet pas l'exploitation directe à l'oeil. Aussi l'image est-elle mise en mémoire conformément à l'invention dans une mémoire d'image 9 puis relue et visualisée par le dispositif de visualisation 5. Le fonctionnement est actif pendant la durée très brève du flash et devient passif pendant le reste du temps d'observation de l'image mémorisée tant que la gachette est enfoncée, d'où le terme semi-actif utilisé pour caractériser ce système d'observation.

Dès que la gachette est relâchée, l'image mémorisée n'est plus visible et l'on revient au mode d'observation normal du paysage toujours en fonctionnement passif.

Dans une première variante du système, la source du flash 10 est une diode laser fournissant dans le proche infra-rouge des impulsions de l'ordre de la microseconde. Le boîtier de réglage 8 synchronise l'alimentation du tube intensificateur 2 avec l'émission du flash 10 et fixe leur décalage dans le temps afin de produire un effet de tomoscopie qui permet de s'affranchir de la rétrodiffusion de la brume atmosphérique de la tranche d'atmosphère proche de l'observateur.

Dans une seconde variante, le flash émet dans toute la gamme du spectre une impulsion de l'ordre de la dizaine de milliseconde et ne dépassant pas 20 millisecondes. Il faut alors interposer un filtre infra-rouge 12 entre le flash 10 et le projecteur 11. Cette durée d'impulsion inexploitable à l'oeil et nécessitant toujours la mise en mémoire de l'image conformément à l'invention est cependant trop élevée pour que l'on puisse introduire un effet de tomoscopie. Le tube intensificateur 2 est alors alimenté en permanence et l'action sur le boîtier de commande 6 déclenche uniquement l'émission du flash lumineux.

Dans un arrangement préférentiel conforme à la première variante du système, le tube 2 est un tube à microcanaux de deuxième ou de troisième génération à double focalisation de proximité couplé à une matrice de détecteurs à CCD; le visualiseur 5 est

un micromoniteur à tube cathodique ou à cristaux liquides par exemple; la caméra solide 3 à CCD a une matrice de 200 × 300 points; la mémoire d'image 9 a 128 × 128 points. L'ensemble constitue une caméra de télévision à effet de tomoscopie de faibles dimensions et portable à la main.

Sur la figure 2, le champ du système en fonctionnement passif est représenté par le rectangle A.

Le champ en fonctionnement semi-actif est représenté par le rectangle B. C'est le champ correspondant à la mémoire d'image. Le champ éclairé par le projecteur 11 est légèrement supérieur au champ B.

## Revendications

1. Système d'observation nocturne semi-actif à intensification de lumière comportant pour l'observation normale du paysage en mode de fonctionnement passif un objectif à grande ouverture (1) formant l'image du paysage sur un tube intensificateur (2), ladite image étant transmise à une caméra de télévision (3) reliée à un dispositif de visualisation (5) par un boîtier de commande (6) dont la mise en action permet le passage à un mode de fonctionnement actif en déclenchant l'émission d'un flash lumineux unique de longueur d'one extérieur au spectre visible pour produire un éclairage pulsé de la zone centrale du paysage, ledit flash lumineux ayant une durée très brève et une faible énergie ne permettant pas son exploitation directe à l'oeil, une mémoire d'image (9) étant chargée par l'image du champ éclairé puis relue et visualisée par ledit dispositif de visualisation (5), le mode de fonctionnement consécutif à l'extinction du flash devenant passif tant que ladite image mise en mémoire est visualisée, l'action sur ledit boîtier de commande permettant le retour à l'observation normale du paysage en mode de fonctionnement passif.

2. Système d'observation nocturne selon la revendication 1, caractérisé en ce que la source (10) dudit flash est une diode laser solide ou autre fournissant des impulsions de l'ordre de la microseconde.

3. Système d'observation nocturne selon la revendication 2, caractérisé en ce qu'un boîtier de réglage (8) synchronise l'alimentation dudit tube intensificateur (2) avec l'émission dudit flash et fixe leur décalage dans le temps afin de produire un effet de tomoscopie.

4. Système d'observation nocturne selon la revendication 1, caractérisé en ce que ledit tube intensificateur (2) étant alimenté en permanence, ledit boîtier de commande (6) déclenche uniquement l'émission du flash lumineux pendant une durée de quelques millisecondes.

## Patentansprüche

1. Halbaktives Nachtsichtsystem mit Lichtverstärkung, das zum normalen Betrachten einer Szene in einer passiven Betriebsart ein Objektiv (1) mit grosser Apertur enthält, das ein Szenenbild auf einer Verstärkerröhre (2) bildet, das auf eine Fernsehkamera (3) übertragen wird, die über eine Steuereinheit (6) an ein Wiedergabegerät (5) angeschlossen ist, die den Übergang nach einer aktiven Betriebsart ermöglicht, bei der ein einziger Lichtblitz mit einer Wellenlänge ausserhalb des sichtbaren Spektrums zum Erzeugen einer pulsierten Beleuchtung des zentralen Bereichs der Szene emittiert wird, dadurch gekennzeichnet, dass der Lichtblitz von sehr kurzer Dauer ist und eine niedrige Energie hat, wodurch es nicht möglich ist, ihn mit dem menschlichen Auge wahrzunehmen, wobei ein Bildspeicher (9) mit dem Bild des beleuchteten Feldes geladen, anschliessend gelesen und vom Wiedergabegerät (5) wiedergegeben wird, wonach die Betriebsart nach dem Erlöschen des Lichtblitzes passiv wird, sobald das gespeicherte Bild wiedergegeben ist, wobei der Betrieb der Steuereinheit die Rückkehr nach der normalen Betrachtung der Szene in der passiven Betriebsart ermöglicht.

2. Nachtsichtsystem nach Anspruch 1, dadurch gekennzeichnet, dass die Quelle (10) des Blitzes eine Festkörper-Laserdiode oder eine andere Quelle ist, die Impulse in der Grössenordnung von einer Mikrosekunde erzeugt.

3. Nachtsichtsystem nach Anspruch 2, dadurch gekennzeichnet, dass eine Regeleinheit (8) die Speisung der Verstärkerröhre (2) mit der Emission des Blitzes synchronisiert und ihre zeitliche Versetzung zum Erzeugen eines tomoskopischen Effekts bestimmt.

4. Nachtsichtsystem nach Anspruch 1, dadurch gekennzeichnet, dass die Verstärkerröhre (2) ununterbrochen gespeist wird, und dass die Steuereinheit (6) nur einen einzigen Lichtblitz mit einer Dauer von wenigen Millisekunden auslöst.

## Claims

1. A semi-active night-viewing system using light intensification, which for normal viewing of a scene in a passive mode of operation comprises a large-aperture objective (1), which forms an image of the scene on an intensifier tube (2), which image is transmitted to a television camera (3) which is connected to a display apparatus (5) via a control unit (6) by means of which it is possible to change-over to an active mode of operation in which a single flash of light of a wavelength outside the visible spectrum is emitted to produce a pulsed illumination of the central area of the scene, which light flash has a very short duration and a low power, the image of the illuminated scene being stored in an image-storage means (9), being subsequently read out and being displayed by said display apparatus (5), the mode of operation after extinction of the flash becoming passive when said stored image is displayed, a turn to normal observation of the scene in the passive mode operation being possible by actuation of said control unit.

2. A night-viewing system as claimed in claim 1, characterized in that the source (10) of said flash is a solid-state laser diode or the like producing pulses of the order of a microsecond.

3. A night-viewing system as claimed in claim 2, characterized in that a control unit (8) synchronizes the power supply of said intensifier tube (2) with said flash and determines their shift in time in order to obtain a tomofluoroscopy effect.

4. A night-viewing system as claimed in claim 1, characterized in that, said intensifier tube (2) being energized permanently, said control unit (6) only triggers a light flash having a duration of a few milliseconds.

4

**FIG.1**

**FIG.2**